# EUROPÄISCHE PATENTSCHRIFT

(11) **EP 3 243 682 B1**
(45) Veröffentlichungstag und Bekanntmachung des Hinweises auf die Patenterteilung: **28.08.2019**
(21) Anmeldenummer: 17166408.9
(22) Anmeldetag: 13.04.2017
(51) Int. Cl.: B60K 17/346, B60K 17/16, B60K 23/04

(54) **STEUER- UND REGELEINRICHTUNG FÜR EINE SPERRE EINES DIFFERENTIALGETRIEBES VON ANGETRIEBENEN RÄDERN UND/ODER VON ANGETRIEBENEN ACHSEN EINES KRAFTFAHRZEUGS**
CONTROL AND MANAGEMENT DEVICE FOR A BLOCK OF A DIFFERENTIAL OF DRIVEN WHEELS AND/OR DRIVEN AXES OF A MOTOR VEHICLE
DISPOSITIF DE RÉGLAGE ET DE COMMANDE DE BLOCAGE D'UNE TRANSMISSION DIFFÉRENTIELLE DE ROUES ENTRAÎNÉES ET/OU D'ESSIEUX ENTRAÎNÉS D'UN VÉHICULE AUTOMOBILE

(30) Priorität: 13.05.2016 DE 102016208330
(43) Veröffentlichungstag der Anmeldung: 15.11.2017
(73) Patentinhaber: ZF Friedrichshafen AG, 88046 Friedrichshafen (DE)
(72) Erfinder: Schuster, Michael, 94157 Perlesreut (DE)

(56) Entgegenhaltungen:
- WO-A1-2013/164656
- US-A1- 2008 255 735

## Beschreibung

Die Erfindung bezieht sich auf ein Fahrzeug mit einer selbsttätigen Steuer- und Regeleinheit und einer Sperre eines Differentialgetriebes von angetriebenen Rädern und/oder von angetriebenen Achsen eines Kraftfahrzeugs, mit Raddrehzahlsensoren zur Erfassung der Drehgeschwindigkeiten und/oder Drehzahlen der Räder und/oder Achsdrehzahlsensoren zur Erfassung der Drehgeschwindigkeiten und/oder Drehzahlen der Achsen, wobei die Steuer- und Regeleinheit so konfiguriert ist, dass sie bei Überschreitung einer vorbestimmten Drehgeschwindigkeitsdifferenz oder Drehzahldifferenz der Räder einer Achse und/oder einer vorbestimmten Drehgeschwindigkeitsdifferenz oder Drehzahldifferenz zweier Achsen die Sperre des Differentialgetriebes für eine bestimmte Haltezeit aktiviert und nach Ablauf der Haltezeit wieder deaktiviert.

Aus der WO 2013/164656 A1 ist ein Differentialsteuerungssystem für ein Kraftfahrzeug, insbesondere für einen Lastkraftwagen, mit mindestens einem Differential bekannt. Das Differentialsteuerungssystem umfasst mindestens eine Differentialsperre, die in der Lage ist, das Differential in einen gesperrten und einen entsperrten Zustand zu steuern, eine Steuereinheit, die die Differentialsperre steuert, ein manuell betätigbares Steuerelement, das frei um eine Achse rotierbar ist, und einen mit dem Steuerelement verbundenen Codierer. Eine Drehung des Steuerelements wird in ein Signal umgewandelt, welches der Steuereinheit zugeführt wird.

Derartige Steuer- und Regeleinheiten für eine Sperre eines Differentialgetriebes werden bei Fahrzeugen mit Verteilergetrieben angewandt. Bei Fahrt auf rutschigem Untergrund und dadurch bedingter Drehgeschwindigkeits- oder Drehzahldifferenz der Räder einer Achse oder zweier Achsen kommt es zu einer selbsttätigen Sperre des Differentialgetriebes für eine bestimmte Haltezeit. Nach Ablauf der Haltezeit wird die Sperre wieder deaktiviert. Bei weiterhin rutschigem Boden kann es passieren, dass nach der Deaktivierung der Sperre die Räder sofort wieder durchdrehen und die Sperre automatisch wieder aktiviert wird. Dadurch kann es innerhalb kurzer Zeit sehr viele Aktivierungen und Deaktivierungen der Sperre geben, die zu einem hohen mechanischen Verschleiß der Sperre führen.

Aufgabe der Erfindung ist es daher eine Steuer- und Regeleinheit der eingangs genannten Art zu schaffen, durch die ein Verschleiß der Sperre reduziert wird.

Diese Aufgabe wird erfindungsgemäß, nach Anspruch 1, dadurch gelöst, dass die Steuer- und Regeleinheit weiterhin so konfiguriert ist, dass sie die reale Zeit zwischen einer Deaktivierung und einem darauf folgenden Auftreten der Aktivierungsbedingungen für eine Aktivierung erfasst und mit einer vorgegebenen Zeit vergleicht und bei Überschreiten der vorgegebenen Zeit durch die gemessene Zeit eine Aktivierung der Sperre und bei Unterschreiten der vorgegebenen Zeit durch die gemessene Zeit und einer Aktivierung der Sperre eine Messung und Speicherung der Fahrgeschwindigkeit des Fahrzeugs ausführt, wobei sie die Sperre so lange aktiv hält, wie die gespeicherte Fahrgeschwindigkeit unter einer vorbestimmten maximal erlaubten Fahrgeschwindigkeit liegt sowie ein Gaspedal zur Laststeuerung eines Motors des Fahrzeugs in Betätigung ist und/oder die Fahrgeschwindigkeit innerhalb eines Toleranzbereichs zur gespeicherten Fahrgeschwindigkeit liegt.

Durch diese Ausbildung wird die Anzahl der Aktivierungen der Sperre und damit auch der Verschleiß der Sperre reduziert. Gleichzeitig führt diese Ausbildung zu einer besseren Fahrbarkeit des Fahrzeugs.

Dabei kann vorzugsweise die vorbestimmte maximal erlaubte Fahrgeschwindigkeit >50 km/h und der Toleranzbereich zur gespeicherten Fahrgeschwindigkeit +/- 3 km/h sein.

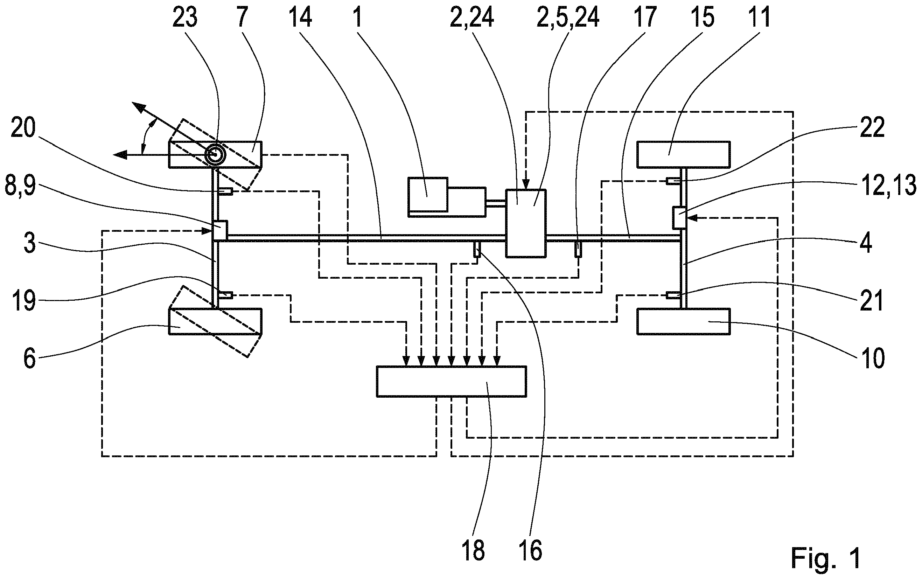

Ein Ausführungsbeispiel der Erfindung ist in der Zeichnung dargestellt und wird im Folgenden näher beschrieben. Die einzige Figur der Zeichnung zeigt eine Prinzipdarstellung eines Fahrzeugs mit einer selbsttätigen Steuer- und Regeleinheit für eine Sperre eines Differentialgetriebes von angetriebenen Rädern und von angetriebenen Achsen eines Kraftfahrzeugs.

Das in der Figur dargestellte Fahrzeug weist einen Motor 1 auf, von dem über ein Getriebe und ein Verteilergetriebe 2 mit Längsdifferential 5 und Längsdifferentialsperre 24 eine erste Antriebswelle 14, die Vorderachse 3 und weiterhin über ein Vorderraddifferential 8 mit einer Vorderraddifferentialsperre 9 die Vorderräder links und rechts 6 und 7 drehbar antreibbar sind. Weiterhin sind von dem Verteilergetriebe 2 mit Längsdifferential 5 und Längsdifferentialsperre 24 eine zweite Antriebswelle 15, die Hinterachse 4 und weiterhin über ein Hinterraddifferential 12 mit einer Hinterraddifferentialsperre 13 die Hinterräder links und rechts 10 und 11 drehbar antreibbar.

Die erste Antriebswelle 14 weist einen ersten Antriebswellendrehzahlsensor 16 und die zweite Antriebswelle 15 einen zweiten Antriebswellendrehzahlsensor 17 auf, durch die die Drehzahlen der ersten Antriebswelle 14 respektive der zweiten Antriebswelle 15 erfasst werden und entsprechende Drehzahlsignale einer Steuer- und Regeleinheit 18 zugeleitet werden.

Dem linken Vorderrad 6 ist ein linker Vorderraddrehzahlsensor 19 und dem rechten Vorderrad 7 ein rechter Vorderraddrehzahlsensor 20 zugeordnet, durch die die Drehzahlen des linken Vorderrades 6 respektive des rechten Vorderrades 7 erfasst werden und entsprechende Drehzahlsignale der Steuer- und Regeleinheit 18 zugeleitet werden.

Weiterhin ist dem linken Hinterrad 10 ein linker Hinterraddrehzahlsensor 21 und dem rechten Hinterrad 11 ein rechter Hinterraddrehzahlsensor 22 zugeordnet, durch die die Drehzahlen des linken Hinterrades 10 respektive des rechten Hinterrades 11 erfasst werden und entsprechende Drehzahlsignale der Steuer- und Regeleinheit 18 zugeleitet werden.

An dem rechten Vorderrad 7 ist ein Lenkwinkelsensor 23 angeordnet, durch den der jeweilige Lenkwinkel der Vorderräder 6 und 7 erfasst wird und ein entsprechendes Lenkwinkelsignal der Steuer- und Regeleinheit 18 zugeleitet wird.

Aus den der Steuer- und Regeleinheit 18 zugeleiteten Drehzahlsignalen und dem Lenkwinkelsignal werden Drehzahldifferenzen an den angetriebenen Rädern der Vorderachse 3 auf Überschreitung einer vorbestimmten Drehzahldifferenz ermittelt und bei Überschreitung dieser Drehzahldifferenz sowie unter den weiteren Bedingungen des Anspruchs 1 die Vorderraddifferentialsperre 9 aktiviert.

In gleicher Weise werden aus den der Steuer- und Regeleinheit 18 zugeleiteten Drehzahlsignalen Drehzahldifferenzen an den angetriebenen Rädern der Hinterachse 4 auf Überschreitung einer vorbestimmten Drehzahldifferenz ermittelt und bei Überschreitung dieser Drehzahldifferenz sowie den weiteren Bedingungen des Anspruchs 1 die Hinterraddifferentialsperre 13 aktiviert.

Aus den der Steuer- und Regeleinheit 18 zugeleiteten Drehzahlsignale an Vorderachse 3 und Hinterachse 4 werden mögliche Drehzahldifferenzen auf Überschreitung einer vorbestimmten Drehzahldifferenz ermittelt und bei Überschreitung dieser Drehzahldifferenz sowie den weiteren Bedingungen des Anspruchs 1 die Längsdifferentialsperre 24 aktiviert.

### Bezugszeichen

- 1: Motor mit Getriebe
- 2: Verteilergetriebe
- 3: Vorderachse
- 4: Hinterachse
- 5: Längsdifferential
- 6: Vorderrad links
- 7: Vorderrad rechts
- 8: Vorderraddifferential
- 9: Vorderraddifferentialsperre
- 10: Hinterrad links
- 11: Hinterrad rechts
- 12: Hinterraddifferential
- 13: Hinterraddifferentialsperre
- 14: erste Antriebswelle
- 15: zweite Antriebswelle
- 16: erster Antriebswellendrehzahlsensor
- 17: zweiter Antriebswellendrehzahlsensor
- 18: Steuer- und Regeleinheit
- 19: linker Vorderraddrehzahlsensor
- 20: rechter Vorderraddrehzahlsensor
- 21: linker Hinterraddrehzahlsensor
- 22: rechter Hinterraddrehzahlsensor
- 23: Lenkwinkelsensor
- 24: Längsdifferentialsperre

## Patentansprüche

1. Fahrzeug mit einer selbsttätigen Steuer- und Regeleinheit (18) und einer Sperre eines Differentialgetriebes von angetriebenen Rädern (6, 7, 10, 11) und/oder von angetriebenen Achsen (3, 4) eines Kraftfahrzeugs, mit Raddrehzahlsensoren (19, 20, 21, 22) zur Erfassung der Drehgeschwindigkeiten und/oder Drehzahlen der Räder (6, 7, 10, 11) und/oder Achsdrehzahlsensoren (16, 17) zur Erfassung der Drehgeschwindigkeiten und/oder Drehzahlen der Achsen (3, 4), wobei die Steuer- und Regeleinheit (18) so konfiguriert ist, dass sie bei Überschreitung einer vorbestimmten Drehgeschwindigkeitsdifferenz oder Drehzahldifferenz der Räder (3, 4; 6, 7) einer Achse (3; 4) und/oder einer vorbestimmten Drehgeschwindigkeitsdifferenz oder Drehzahldifferenz zweier Achsen (3, 4) die Sperre des Differentialgetriebes für eine bestimmte Haltezeit aktiviert und nach Ablauf der Haltezeit wieder deaktiviert, **dadurch gekennzeichnet, dass** die Steuer- und Regeleinheit (18) weiterhin so konfiguriert ist, dass sie die reale Zeit zwischen einer Deaktivierung und einem darauf folgenden Auftreten der Aktivierungsbedingungen für eine Aktivierung erfasst und mit einer vorgegebenen Zeit vergleicht und bei Überschreiten der vorgegebenen Zeit durch die gemessene Zeit eine Aktivierung der Sperre und bei Unterschreiten der vorgegebenen Zeit durch die gemessene Zeit und einer Aktivierung der Sperre eine Messung und Speicherung der Fahrgeschwindigkeit des Fahrzeugs ausführt, wobei sie die Sperre so lange aktiv hält, wie die gespeicherte Fahrgeschwindigkeit unter einer vorbestimmten maximal erlaubten Fahrgeschwindigkeit liegt sowie ein Gaspedal zur Laststeuerung eines Motors des Fahrzeugs in Betätigung ist und/oder die Fahrgeschwindigkeit innerhalb eines Toleranzbereichs zur gespeicherten Fahrgeschwindigkeit liegt.

2. Fahrzeug nach Anspruch 1, **dadurch gekennzeichnet, dass** die vorbestimmte maximal erlaubte Fahrgeschwindigkeit >50 km/h ist.

3. Fahrzeug nach einem der Ansprüche 1 und 2, **dadurch gekennzeichnet, dass** der Toleranzbereich zur gespeicherten Fahrgeschwindigkeit +/- 3 km/h ist.

## Claims

1. Vehicle having an automatic open-loop and closed-loop control unit (18) and a lock of a differential gear of driven wheels (6, 7, 10, 11) and/or of driven axles (3, 4) of a motor vehicle, with wheel speed sensors (19, 20, 21, 22) for sensing the rotational speeds and/or rpm of the wheels (6, 7, 10, 11) and/or axle rpm sensors (16, 17) for sensing the rotational speeds and/or rpm of the axles (3, 4), wherein the open-loop and closed-loop control unit (18) is configured in such a way that when a predetermined rotational speed difference or rpm difference of the wheels (3, 4; 6, 7) of one axle (3; 4) is exceeded and/or a predetermined rotational speed difference or rpm difference of two axles (3, 4) is exceeded, the lock of the differential gear is activated for a specific holding time, and after the expiry of the holding time deactivated again,
**characterized in that** the open-loop and closed-loop control unit (18) is furthermore configured in such a way that it senses the real time between deactivation and subsequent occurrence of the activation conditions for activation and compares said time with a predefined time, and when the predefined time is overshot by the measured time it executes activation of the lock, and when the predefined time is undershot by the measured time and the lock is activated it executes measurement and storage of the velocity of the vehicle, wherein it keeps the lock active until the stored velocity is below a predetermined maximum permitted velocity and an accelerator pedal for controlling the load of an engine of the vehicle is being activated and/or the velocity is within a tolerance range with respect to the stored velocity.

2. The vehicle according to Claim 1, **characterized in that** the predetermined maximum permitted velocity is >50 km/h.

3. The vehicle according to one of Claims 1 and 2, **characterized in that** the tolerance range with respect to the stored velocity is +/- 3 km/h.

## Revendications

1. Véhicule doté d'une unité de commande et de réglage automatique (18) et d'un blocage d'une transmission différentielle de roues entraînées (6, 7, 10, 11) et/ou d'essieux entraînés (3, 4) d'un véhicule automobile, avec des capteurs de nombre de tours des roues (19, 20, 21, 22) pour la détection des vitesses de rotation et/ou des nombres de tours des roues (6, 7, 10, 11) et/ou des capteurs de nombre de tours des essieux (16, 17) pour la détection des vitesses de rotation et/ou des nombres de tours des essieux (3, 4), dans lequel l'unité de commande et de réglage (18) est configurée de telle manière qu'en cas de dépassement d'une différence de vitesse de rotation ou d'une différence de nombre de tours prédéterminée des roues (3, 4; 6, 7) d'un essieu (3; 4) et/ou d'une différence de vitesse de rotation ou d'une différence de nombre de tours prédéterminée de deux essieux (3, 4) elle active le blocage de la transmission différentielle pendant un temps de maintien déterminé et le désactive à nouveau après l'expiration du temps de maintien, **caractérisé en ce que** l'unité de commande et de réglage (18) est en outre configurée de telle manière qu'elle détecte le temps réel entre une désactivation et une survenance suivante des conditions d'activation pour une activation et elle le compare avec un temps prédéterminé et en cas de dépassement du temps prédéterminé par le temps mesuré elle effectue une activation du blocage et en cas de baisse du temps mesuré en dessous du temps prédéterminé et d'une activation du blocage elle effectue une mesure et une mémorisation de la vitesse de roulage du véhicule, dans lequel elle maintient le blocage actif aussi longtemps que la vitesse de roulage mémorisée se situe en dessous d'une vitesse de roulage autorisée maximale prédéterminée et qu'une pédale d'accélérateur est actionnée pour la commande de la charge d'un moteur du véhicule et/ou que la vitesse de roulage se situe à l'intérieur d'une plage de tolérance de la vitesse de roulage mémorisée.

2. Véhicule selon la revendication 1, **caractérisé en ce que** la vitesse de roulage autorisée maximale prédéterminée est > 50 km/h.

3. Véhicule selon une des revendications 1 et 2, **caractérisé en ce que** la plage de tolérance de la vitesse de roulage mémorisée est ± 3 km/h.
